(19) Europäisches Patentamt
European Patent Office
Office européen des brevets

(11) **EP 3 710 321 B1**

(12) **EUROPÄISCHE PATENTSCHRIFT**

(45) Veröffentlichungstag und Bekanntmachung des Hinweises auf die Patenterteilung:
**11.01.2023** **Patentblatt 2023/02**

(21) Anmeldenummer: **18811445.8**

(22) Anmeldetag: **07.11.2018**

(51) Internationale Patentklassifikation (IPC):
**B60T 8/40** *(2006.01)*     **B60T 13/68** *(2006.01)*
**B60T 13/66** *(2006.01)*    **B60T 13/74** *(2006.01)*
**B60T 13/14** *(2006.01)*    **B60T 8/32** *(2006.01)*
**B60T 8/88** *(2006.01)*     **B60T 8/90** *(2006.01)*
**B60T 17/22** *(2006.01)*    **B60T 7/04** *(2006.01)*
**B60T 13/16** *(2006.01)*

(52) Gemeinsame Patentklassifikation (CPC):
**B60T 13/686; B60T 7/042; B60T 8/4081;**
**B60T 8/885; B60T 8/90; B60T 13/146;**
**B60T 13/161; B60T 13/166; B60T 13/662;**
**B60T 13/745; B60T 17/22; B60T 17/221;**
**B60T 17/222;** B60T 2270/402; B60T 2270/404;

(Forts.)

(86) Internationale Anmeldenummer:
**PCT/EP2018/080457**

(87) Internationale Veröffentlichungsnummer:
**WO 2019/096651 (23.05.2019 Gazette 2019/21)**

(54) **VERFAHREN ZUM ÜBERPRÜFEN DER FUNKTIONALITÄT EINES BREMSSYSTEMS UND BREMSSYSTEM**

METHOD FOR CHECKING THE FUNCTIONALITY OF A BRAKING SYSTEM, AND BRAKING SYSTEM

PROCÉDÉ DE CONTRÔLE DE LA FONCTIONNALITÉ D'UN SYSTÈME DE FREINAGE ET SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2017 DE 102017220308**

(43) Veröffentlichungstag der Anmeldung:
**23.09.2020 Patentblatt 2020/39**

(73) Patentinhaber: **Continental Automotive Technologies GmbH**
**30165 Hannover (DE)**

(72) Erfinder:
• **NEU, Andreas**
  **76773 Kuhardt (DE)**
• **HOLZHERR, Boris**
  **61169 Friedberg (DE)**
• **BUCH, Thomas**
  **69115 Heidelberg (DE)**
• **BRENN, Martin**
  **55130 Mainz (DE)**
• **BALTES, Andreas**
  **65843 Sulzbach (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
WO-A1-2017/144201     DE-A1-102011 078 890
US-A1- 2016 052 501     US-B1- 6 901 789

(52) Gemeinsame Patentklassifikation (CPC): (Forts.)
B60T 2270/406

## Beschreibung

Die Erfindung betrifft ein Verfahren zum Überprüfen der Funktionalität eines Bremssystems für Kraftfahrzeuge, welches umfasst ein Hauptmodul, umfassend:

- hydraulisch betätigbare Radbremsen, wobei jeweils zwei Radbremsen einem Bremskreis zugeordnet sind;

- zumindest ein elektrisch betätigbares Radventil je Radbremse zum Einstellen radindividueller Bremsdrücke;

- eine Druckbereitstellungseinrichtung zum aktiven Druckaufbau in den Radbremsen;

- einen unter Atmosphärendruck stehenden Druckmittelvorratsbehälter, und

weiterhin umfassend ein Zusatzmodul, welches für zwei Radbremsen jeweils umfasst:

- einen Drucksensor zur Messung des Druckes in einer zur Radbremse führenden Radbremsleitung;
- ein in der Radbremsleitung angeordnetes stromlos offenes Trennventil;
- eine Pumpe.

Sie betrifft weiterhin ein zugehöriges Bremssystem.

In der Kraftfahrzeugtechnik finden "Brake-by-Wire"-Bremsanlagen eine immer größere Verbreitung. Derartige Bremsanlagen umfassen oftmals neben einem durch den Fahrzeugführer betätigbaren Hauptbremszylinder eine elektrisch ("by-Wire") ansteuerbare Druckbereitstellungseinrichtung, mittels welcher in der Betriebsart "Brake-by-Wire" eine Betätigung der Radbremsen stattfindet.

Bei diesen Bremssystemen, insbesondere elektrohydraulischen Bremssystemen mit der Betriebsart "Brake-by-Wire", ist der Fahrer von dem direkten Zugriff auf die Bremsen entkoppelt. Bei Betätigung des Pedals werden gewöhnlich eine Pedalentkopplungseinheit und ein Simulator betätigt, wobei durch eine Sensorik der Bremswunsch des Fahrers erfasst wird. Der gewöhnlich als Hauptbremszylinder ausgebildete Pedalsimulator dient dazu, dem Fahrer ein möglichst vertrautes und komfortables Bremspedalgefühl zu vermitteln. Der erfasste Bremswunsch führt zu der Bestimmung eines Sollbremsmomentes, woraus dann der Sollbremsdruck für die Bremsen ermittelt wird. Der Bremsdruck wird dann aktiv von einer Druckbereitstellungseinrichtung in den Bremsen aufgebaut.

Das tatsächliche Bremsen erfolgt also durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. für den Fahrer komfortabel verwirklichen.

Die Druckbereitstellungseinrichtung in oben beschriebenen Bremssystemen wird auch als Aktuator bzw. hydraulischer Aktuator bezeichnet. Insbesondere werden Aktuatoren als Linearaktuatoren bzw. Lineareinheiten ausgebildet, bei denen zum Druckaufbau ein Kolben axial in einen hydraulischen Druckraum verschoben wird, der in Reihe mit einem Rotations-Translationsgetriebe gebaut ist. Die Motorwelle eines Elektromotors wird durch das Rotations-Translationsgetriebe in eine axiale Verschiebung des Kolbens umgewandelt.

Aus der DE 10 2013 204 778 A1 ist eine "Brake-by-Wire"-Brems-anlage für Kraftfahrzeuge bekannt, welche einen bremspedalbetätigbaren Tandemhauptbremszylinder, dessen Druckräume jeweils über ein elektrisch betätigbares Trennventil trennbar mit einem Bremskreis mit zwei Radbremsen verbunden sind, eine mit dem Hauptbremszylinder hydraulisch verbundene, zu- und abschaltbare Simulationseinrichtung, und eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, umfasst, wobei die Druckbereitstellungseinrichtung über zwei elektrisch betätigbare Zuschaltventile mit den Einlassventilen der Radbremsen verbunden ist.

Zur besseren Druckregelung steht ein Drucksensor im Bereich zwischen Aktuator und den Aktuatorzuschaltventilen zur Verfügung. Dieser Sensor erfasst den vom Linearaktuator erzeugten hydraulischen Druck (Systemdruck). Die Position des Linearaktuators wird gewöhnlich erfasst durch einen Motorwinkelsensor.

Es sind weiterhin Bremssysteme bekannt, bei denen in wenigstens einem Bremskreis mit Hilfe einer Pumpe zur Unterstützung des Fahrers Bremsdruck aufgebaut werden kann. Diese Bremssysteme sind vakuumlose Bremssysteme, die hydraulisch eine Bremskraftverstärkung bereitstellen.

Beide Bremssysteme können zur Erhöhung der Sicherheit mit einem Zusatzmodul ausgerüstet werden, welches bei zwei Bremsen auch bei Ausfall des Hauptbremssystems bzw. Hauptmoduls noch eine aktive Bremsung durchführen kann. Das Zusatzmodul umfasst dazu wenigstens eine Pumpe zum aktiven Druckaufbau. Es weist weiterhin je Bremse ein Trennventil und ein Auslassventil zur radindividuellen Radbremsdruckregelung auf.

Ein derartiges Zusatzmodul kann insbesondere auch vorgesehen sein bei hochautomatisierten Fahrzeugen, bei denen das Fahrzeug Bremsvorgänge im Wesentlichen vollautomatisch und ohne Einmischung des Fahrers fährt und Bremsvorgänge ausführt. Fällt das Hauptmodul aus, kann durch das Zusatzmodul das Fahrzeug noch zum Stillstand gebracht werden.

Aus der WO 2017/144201 A1 geht ein Bremssystem für Kraftfahrzeuge hervor, welches ein Hauptmodul und ein Zusatzmodul umfasst. Das Hauptmodul umfasst hydraulisch betätigbare Radbremsen, wobei jeweils zwei Radbremsen einem Bremskreis zugeordnet sind, zumindest ein elektrisch betätigbares Radventil je Radbremse zum Einstellen radindividueller Bremsdrücke, eine Druckbereitstellungseinrichtung zum aktiven Druckaufbau in den Radbremsen und einen unter Atmosphärendruck stehenden Druckmittelvorratsbehälter. Das Zusatzmodul umfasst für zwei Radbremsen jeweils einen Drucksensor zur Messung des Druckes in einer zur Radbremse führenden Radbremsleitung, ein in der Radbremsleitung angeordnetes stromlos offenes Trennventil und eine Pumpe.

Vor dem Betrieb wird ein Bremssystem auf korrekte Funktionalität geprüft. Insbesondere bei hochautomatisiertem Fahren (HAF) ist es essentiell wichtig sicherzustellen, dass bei einem redundant ausgebildeten Bremssystem zugleich das primäre Bremsmodul als auch das Zusatzmodul funktionsfähig sind. Dazu werden Testroutinen angewandt und geprüft, ob ein erwartetes Ergebnis, dass ein ordnungsgemäßes Funktionieren repräsentiert, eintritt. Für das redundante System mit Primärmodul und Zusatzmodul sind gewöhnlich zwei Tests durchzuführen.

Zum einen wird in einem Spülzyklus bzw. Spülvorgang überprüft, ob die Druckbereitstellungseinrichtung bei einer Ventilschaltung, die dies prinzipiell ermöglicht, Bremsflüssigkeit in den Ausgleichsbehälter verschieben kann bzw. ob bestimmte hydraulische Leitungen nicht blockiert sind. Damit wird sichergestellt, dass die Leitungen nicht blockiert oder verstopft sind. Darüber hinaus wird eventuell vorhandene Luft im Bremssystem in Richtung des Vorratsbehälters verschoben. In dem Spülzyklus werden beide Seiten (vorn rechts und vorne links) bzw. beide hydraulischen Kreise sequenziell geprüft, so dass jeder Seite eindeutig ein Druck zugeordnet werden kann.

In einem Druckaufbauzyklus bzw. Druckaufbauvorgang wird geprüft, ob bei geeigneter Ansteuerung der Ventile und der Motorpumpe innerhalb einer gewissen Zeit bedarfsgerecht ein Mindestdruck durch das Zusatzmodul bzw. Sekundärsystem aufgebaut werden kann.

Der Einfluss der Viskosität der Bremsflüssigkeit auf das jeweilige Ergebnis ist sehr groß. Die Viskosität hängt dabei nicht nur von Typ und Marke der Bremsflüssigkeit ab, sondern ändert sich stark bei Temperaturen unter -10 °C, insbesondere auch mit unerwünschtem zunehmendem Wassergehalt. Um sicher zu sein, dass Bremssystem einsatzbereit ist, müssen die Akzeptanzkriterien so gelegt werden, dass häufig funktionsfähige Bremssysteme als defekt erkannt werden. Bei Verwendung einer Kennlinie Viskosität über Temperatur bleiben die Faktoren Wassergehalt, Typ der Bremsflüssigkeit und Alterung der Bremsflüssigkeit unberücksichtigt. Das System kann bei automatisierten Fahrvorgängen nicht auf belastbare Informationen über die Viskosität zugreifen. Daraus resultiert ein erhöhtes Risiko im Tieftemperaturbereich, das Sicherheitsziel "Nicht Unterbremsen" zu verletzen.

Eine Vorrichtung und ein Verfahren zum Ermitteln zumindest einer Größe bezüglich eines Zustandes einer Bremsflüssigkeit in einem Bremssystem eines Fahrzeuges sind aus der DE 10 2014 216 843 A1 bekannt.

In der US 2016/052501 A1 wird ein Verfahren zum Ermitteln einer Viskosität der Bremsflüssigkeit eines Bremssystems offenbart. Die Viskosität wird dabei gemäß einer Formel in Abhängigkeit von einer Druckdifferenz bestimmt. Die so bestimmte Viskosität wird dann zur optimierten Ansteuerung beim Betreiben des Bremssystems herangezogen.

Die US 6 901 789 B1 offenbart ein Verfahren zum Ermitteln einer Kenngröße für die Viskosität einer Bremsflüssigkeit. Die Kenngröße wird dann einem Druckmodell als Eingangsgröße zugeführt und zur Modifizierung oder Korrektur von Parametern des Druckmodells verwendet, wobei das Druckmodell zur Fahrdynamik-Regelung benutzt wird.

Der Erfindung liegt die Aufgabe zugrunde, ein Verfahren zur Überprüfung der Funktionalität eines Bremssystems bereitzustellen, bei welchem die Zuverlässigkeit der Testergebnisse optimiert ist. Weiterhin soll ein entsprechendes Bremssystem bereitgestellt werden.

In Bezug auf das Verfahren wird diese Aufgabe erfindungsgemäß gelöst, indem wobei zur Beurteilung der Funktionalität wenigstens eine Größe gemessen wird, und wobei wenigstens ein Akzeptanzkriterium verwendet wird, und wobei überprüft wird, ob die Größe diesem Akzeptanzkriterium genügt, und wobei wenigstens eine die Viskosität der Bremsflüssigkeit repräsentierende Größe bestimmt bzw. gemessen wird, und wobei das wenigstens eine Akzeptanzkriterium von einer die Viskosität repräsentierenden Größe abhängt.

Vorteilhafte Ausgestaltungen der Erfindung sind Gegenstand der Unteransprüche.

Die Erfindung geht von der Überlegung aus, dass bisherige Verfahren die aktuell vorliegenden physikalischen Verhältnisse des Bremssystems zu wenig berücksichtigen, so dass Akzeptanzkriterien, die erfüllt sein müssen, damit das Bremssystem als funktionsfähig beurteilt wird, pauschal und konservativ gewählt werden. Dadurch wird in Situationen, in denen das Bremssystem noch funktionsfähig ist, fälschlicherweise ein Nichtfunktionieren erkannt.

Wie nunmehr erkannt wurde, lassen sich diese Akzeptanzkriterien verbessern, indem als wesentlicher Einfluss auf das Verhalten des Bremssystems bei Spül- und Druckaufbauvorgängen die Viskosität der Bremsflüssigkeit gemessen und für die Akzeptanzkriterien berücksichtigt wird.

In einer bevorzugten Ausführung wird ein Spülvorgang durchgeführt, bei dem die Druckbereitstellungsvorrichtung Bremsflüssigkeit in den Druckmittelvorratsbehälter verschiebt, wobei ein erster Systemdruck gemessen wird, und wobei ein zweiter Systemdruck gemessen wird, und wobei ein Akzeptanzkriterium als erfüllt gilt, wenn der erste Systemdruck kleiner ist als ein Akzeptanzdruck, die von der Druckdifferenz aus erstem und zweitem Systemdruck abhängt. Beim Spülvorgang bzw. Druckaufbauvorgang wird jeweils die Druckbereitstellungseinrichtung des Hauptmoduls aktiviert.

Die Viskosität der Bremsflüssigkeit wird somit dahingehend berücksichtigt, dass der erste und/oder zweite Systemdruck und damit auch deren Differenz von der Viskosität abhängt.

Der Akzeptanzdruck wird vorzugsweise gebildet aus der Summe einer ersten Konstanten und einem Produkt aus der Druckdifferenz aus erstem und zweitem Systemdruck und einer zweiten Konstanten.

Die erste Konstante hat bevorzugt einen Wert, der größer als Null bar ist. Die zweite Konstante ist bevorzugt eine Zahl mit einem Wert größer/größer gleich 1.

In einer bevorzugten Ausführungsform des Verfahrens wird der erste Systemdruck in einer hydraulischen Leitung im Hauptmodul gemessen und wobei der zweite Systemdruck wird in einer hydraulischen Leitung im Zusatzmodul gemessen.

Bevorzugt ist in einem ersten Bremskreis im Zusatzmodul ein Drucksensor angeordnet, mit dem der zweite Systemdruck gemessen wird, wobei der im ersten Bremskreis gemessene Wert des Systemdrucks auch bei dem Spülvorgang des zweiten Bremskreises verwendet wird.

In einer bevorzugten Ausführungsform des Verfahrens wird ein Druckaufbauvorgang mit Hilfe der Druckbereitstellungseinrichtung durchgeführt, wobei für eine vorgegebene Zeitspanne ein Bremsflüssigkeit von der Druckbereitstellungseinrichtung in wenigstens eine Radbremse gefördert wird, und wobei ein Systemdruck gemessen wird, der nach der vorgegebenen Zeitspanne vorliegt, und wobei ein Akzeptanzkriterium als erfüllt gilt, wenn der gemessene Druck größer ist als ein erwarteter Druck, der Zeitspanne und einer erwarteten Förderleistung der Druckbereitstellungseinrichtung abhängt.

Vorteilhafterweise wird ein erwartetes Fördervolumen berechnet aus dem Produkt einer von der Viskosität und/oder Temperatur abhängigen Förderleistung und der vorgegebenen Zeitspanne, wobei der erwartete Druck aus dem erwarteten Fördervolumen mit Hilfe einer vorgegebenen Druck-Volumen-Kennlinie berechnet wird.

Bevorzugt wird das erwartete Fördervolumen um ein Lüftspielvolumen korrigiert. Dazu wird vorteilhafterweise das Lüftspielvolumen von dem Fördervolumen subtrahiert.

Bevorzugt wird die Temperatur der Bremsflüssigkeit mittels wenigstens eines Temperatursensors gemessen.

Bevorzugt wird die Temperatur mit Hilfe einer Vielzahl von Temperatursensoren gemessen, aus deren Messwerten dann ein Mittelwert gebildet wird.

Bevorzugt wird mittels einer Kennlinie aus der Temperatur die Viskosität der Bremsflüssigkeit bestimmt.

Vorteilhafterweise sind wenigstens ein Drucksensor im Hauptmodul und wenigstens ein Drucksensor im Zusatzmodul angeordnet.

Der jeweilige Temperatursensor ist vorteilhafterweise mit jeweils einem Drucksensor in integrierter Bauweise gebildet. Auf diese Weise kann Bauraum gespart werden und die Anzahl der benötigten Bauteile kann reduziert werden.

In Bezug auf das Bremssystem wird die oben genannte Aufgabe erfindungsgemäß gelöst mit einer Steuer- und Regeleinheit, in der ein oben beschriebenes Verfahren hardware- und/oder softwaremäßig implementiert ist.

Bevorzugt ist die Druckbereitstellungseinrichtung als Linearaktuator ausgebildet.

Die Vorteile der Erfindung liegen insbesondere darin, dass der Einfluss der Viskosität auf das Erkennen des Zustandes des Bremssystems berücksichtigt werden kann. Die Akzeptanzkriterien können derart gewählt werden, dass die Wahrscheinlichkeit, eine intakte Bremsanlage als fehlerhaft zu erkennen, auf ein akzeptables Maß gesenkt wird. Daraus resultiert eine erhöhte Robustheit in der Beurteilung der Bremsanlage hinsichtlich ihrer korrekten Funktion. Darüber hinaus kann eine Wartungsempfehlung für einen Bremsflüssigkeitstausch gegeben werden, falls die Viskosität außerhalb akzeptabler Grenzwerte liegt.

Durch die Verwendung der im Bremssystem vorhandenen Sensoren entstehen keine zusätzlichen Kosten. Durch die Verwendung mehrerer Sensoren und redundante Messungen werden die Zuverlässigkeit und Robustheit der Testresultate erhöht.

Ein Ausführungsbeispiel der Erfindung wird anhand einer Zeichnung näher erläutert. Darin zeigen in stark schematisierter Darstellung:

FIG. 1    ein Bremssystem mit einem Hauptmodul und einem Zusatzmodul in einer bevorzugten Ausführungsform;

FIG. 2    das Bremssystem gemäß FIG. 1 in einem ersten Zustand; und

FIG. 3    das Bremssystem gemäß FIG. 1 in einem zweiten Zustand.

Gleiche Teile sind in allen Figuren mit denselben Bezugszeichen versehen.

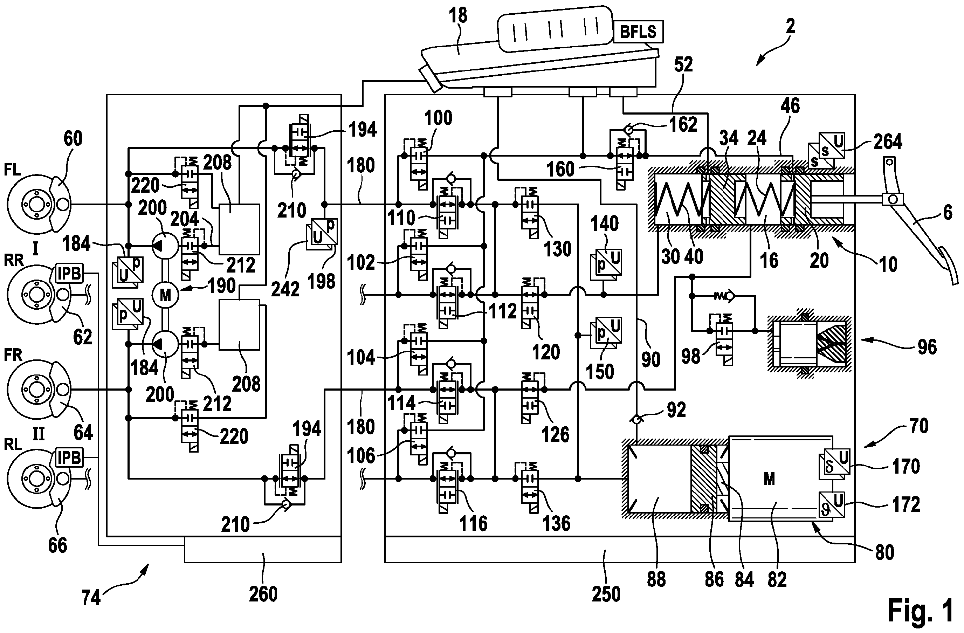

Ein in FIG. 1 dargestelltes Bremssystem 2 umfasst ein Bremspedal 6, mit welchem ein Tandemhauptbremszylinder 10 betätigt wird. Der Tandemhauptbremszylinder 10 weist eine erste Druckkammer bzw. Primärdruckkammer 16 auf, in die ein Primärdruckkolben 20 verschiebbar ist, der von einem ersten elastischen Element 24 beaufschlagt wird. Der Tandemhauptbremszylinder 10 weist eine zweite Druckkammer bzw. Sekundärkammer 30 auf, in die ein, insbesondere schwimmend gelagerter, Sekundärkolben 34 verschiebbar ist, der von einem zweiten elastischen Element 40 beaufschlagt. Die Primärdruckkammer 16 ist über eine hydraulische Leitung 46 im unbetätigten Zustand des Primärdruckkolbens 20 mit einem Druckmittelvorratsbehälter 18 verbunden. Die Sekundärdruckkammer 16 ist über eine hydraulische Leitung 52 im unbetätigten Zustand des Sekundärdruckkolbens 34 mit dem Druckmittelvorratsbehälter 18 verbunden.

Die Bremsanlage bzw. das Bremssystem 2 umfasst vier hydraulisch betätigbare Radbremsen 60, 62, 64, 66. Das Bremssystem 2 weist ein Hauptmodul 70, welches im Normalbetrieb der Bremsanlage zur Druckregelung eingesetzt wird und ein Zusatzmodul 74, welches bei Fehlfunktion oder Ausfall des Hauptmoduls 70 eingesetzt wird.

Das Bremssystem 2 weist im Hauptmodul 70 noch folgende weitere Komponenten auf. Eine Druckbereitstellungseinrichtung 80 ist als Linearaktuator ausgebildet mit einem Elektromotor 82, einem nachgeschalteten Rotations-Translationsgetriebe 84, welches die Rotation der Motorwelle in eine Translation eines Druckkolbens 86 umwandelt, der einen Druckraum 88 begrenzt. Der Druckraum 88 ist über eine Nachsaugleitung 90, in die ein Rückschlagventil 92 geschaltet ist, mit dem Druckmittelvorratsbehälter 18 verbunden. Das Rotations-Translationsgetriebe 84 ist bevorzugt als Kugelgewindetrieb (KGT) ausgebildet.

Die Primärdruckkammer 16 ist hydraulisch mit einem Simulator 96 verbunden, wobei die Verbindung zwischen Primärdruckkammer 16 und Simulator 16 durch ein Simulatorventil 98 trennbar ist. Jeder der Radbremsen 60-66 ist jeweils ein, bevorzugt stromlos geschlossenes, Auslassventil 100, 102, 104, 106 und jeweils ein, bevorzugt stromlos offenes Einlassventil 110, 112, 114, 116 zugeordnet. Dem jeweiligen Einlassventil 110-116 ist jeweils ein Rückschlagventil parallel geschaltet.

Die Radbremsen 60, 62 sind einem ersten Bremskreis I zugeordnet und hydraulisch durch ein Trennventil 120 trennbar mit der Sekundärkammer 30 verbunden. Die Radbremsen 64, 66 sind einem zweiten Bremskreis II zugeordnet und hydraulisch durch ein Trennventil 126 trennbar mit der Primärkammer 16 verbunden.

Die Druckbereitstellungseinrichtung 80 ist hydraulisch durch ein Zuschaltventil 130 mit den Radbremsen 60, 62 verbindbar und hydraulisch durch ein Zuschaltventil 136 mit den Radbremsen 64, 66 verbundbar.

Ein bevorzugt redundant ausgebildeter Drucksensor 140 misst den Druck in der Sekundärkammer 30. Ein bevorzugt redundant ausgebildeter Drucksensor 150 misst den Druck in der Druckkammer 88, der als Systemdruck bezeichnet wird.

Bei geschaltetem Ventil 160 und geschaltetem Ventil 136 kann ein weiterer Selbsttest zum Nachweis der Fähigkeit der Druckbereitstellungseinrichtung Druck bereit zustellen durchgeführt werden. Ventil 162 verhindert Unterdruck in der Betätigungseinheit, falls beispielsweise die Druckbereitstellungseinrichtung im Rahmen dieses Selbsttests in die hintere Endlage zurückfährt. Die Motorlage bzw. der Drehwinkel wird mit Hilfe eines Sensors 170 gemessen. Bevorzugt ist ein weiterer Sensor 172 zur Messung der Motorwicklungstemperatur vorgesehen. Die Aufteilung der Radbremsen ist diagonal, wobei die Bremsen 60 und 64 die Vorderradbremsen sind.

Ein Zusatzmodul 74 des Bremssystems 2 ist dazu ausgelegt, bedarfsweise, insbesondere bei einer Störung oder einem totalen Ausfall des Hautmoduls 70, in einer ersten Betriebsart in den Radbremsen 60, 64 bedarfsweise radindividuellen Bremsdruck einzustellen. Die Radbremsen 62, 66 sind direkt hydraulisch an Druckbereitstellungseinrichtung 80 bzw. Hauptbremszylinder 10 angebunden, in diesen Bremsen wird vom Zusatzmodul 74 kein Radbremsdruck eingeregelt. In einer weiteren Betriebsart, falls bei Teilausfall des Hauptmoduls 70 noch dessen Ventile 100-162 betriebsbereit wären, ist das Zusatzmodul 74 des Bremssystems 2 ist dazu ausgelegt in allen Rädern 60 bis 66 Bremsdruck einzustellen.

In einer hydraulischen Leitung 180, durch die die Radbremse 60 bedarfsweise mit dem Hauptbremszylinder 10 bzw. der Druckbereitstellungseinrichtung 80 verbindbar ist, sind, von der Radbremse 60 aus gesehen, ein Drucksensor 182, eine Pumpe 190 mit einer ersten Förderpumpe 200, ein stromlos offenes Trennventil 194, zu dem ein Rückschlagventil 210 parallel geschaltet ist, und ein Drucksensor 198 angeordnet. Die Pumpe 200 ist saugseitig über eine hydraulische Saugleitung 204 mit einem Volumenspeicher 208 für Druckmittel verbunden, der über eine Leitung mit dem Druckmittelvorratsbehälter 18 verbunden ist. In die Saugleitung 204 ist ein stromlos geschlossenes Umschaltventil 212 geschaltet, welches zur Drosselung der Pumpe verwendet wird. Der Volumenspeicher 208 ist weiterhin über ein bevorzugt stromlos geschlossenes Zuschaltventil 220 mit der Radbremse 60 verbunden.

In gleicher Weise ist das Zusatzmodul 74 in Bezug auf die Radbremse 64 ausgebildet, die entsprechenden Komponenten sind mit den gleichen Bezugszeichen versehen. Im Unterschied zu der Radbremse 60 ist hier allerdings kein Drucksensor 198 vorgesehen, welcher den Druck in der Leitung 180 misst. In einer alternativen Ausbildung kann auch hier ein weiterer Drucksensor 198 vorgesehen sein. In der bevorzugten Ausführung ist wenigstens ein Drucksensor kombiniert mit einem Temperatursensor 242 gebildet (exemplarisch gezeigt bei dem Drucksensor 198). Dadurch kann an den Stellen, an denen der Druckgemessen wird, auch die Temperatur der Bremsflüssigkeit gemessen werden. Bevorzugt sind alle Drucksensoren mit Temperatursensoren kombiniert, bzw. beide Sensoren sind in integrierter Bauweise gebildet.

Eine erste elektronische Steuer- und Regeleinheit 250 im Hauptmodul dient zur Erfassung des Bremswunsches, insbesondere mit Hilfe eines Wegsensors 264 und der Ansteuerung der Druckbereitstellungseinrichtung 80 sowie der Ventile 100-106, 110-16, 120, 126, 130, 136.

Eine zweite elektronische Steuer- und Regeleinheit 260 im Zusatzmodul 74 dient zur Ansteuerung der Pumpe 200 sowie der Ventile 194, 220, 212. Die elektronische Steuer- und Regeleinheit 260 erhält als Eingangssignal den durch den Sensor 264 erfassten Fahrerbremswunsch. Bevorzugt sind die beiden Steuer- und Regeleinheiten 250, 260 signaltechnisch zumindest in einer Richtung miteinander verbunden.

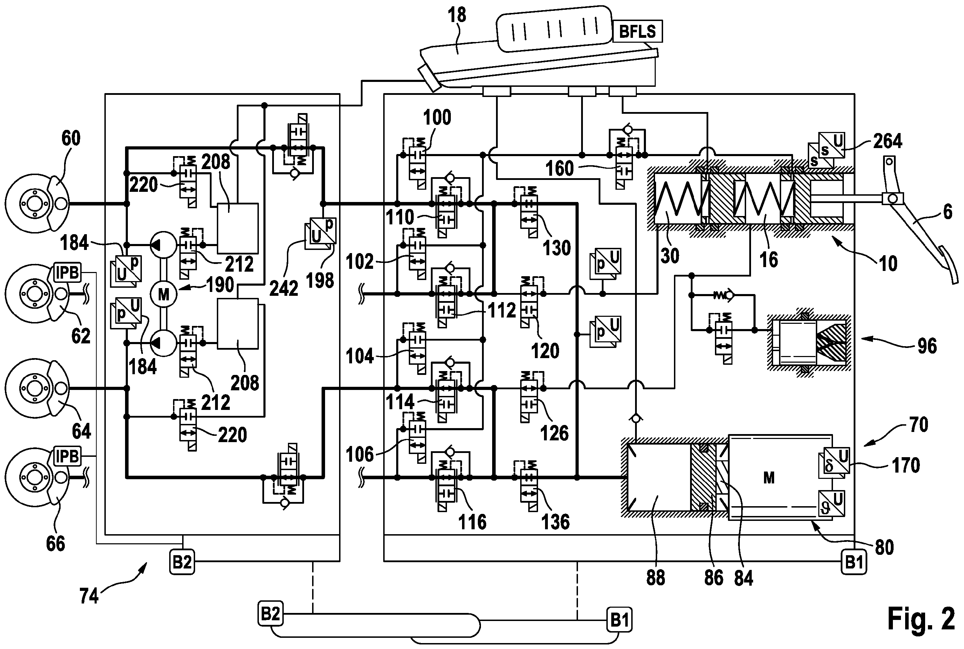

Das Bremssystem 2 ist in einer Schaltstellung, die einer Normalbremsung entspricht, in FIG. 2 dargestellt. Der Fahrer betätigt das Bremspedal 6 und verschiebt Druckmittel aus der Primärkammer in Richtung des Simulators 96. Die beiden Kammern 16, 30 des Hauptbremszylinders 10 sind durch die geschlossenen Trennventile 120, 126 hydraulisch von den Radbremsen 60-66 getrennt. Die Zuschaltventile 130, 136 sind geöffnet, so dass durch die Druckbereitstellungseinrichtung 80 aktiv Druck in den Radbremsen aufgebaut werden kann. Dazu sind die Einlassventile 110-116 geöffnet und die Auslassventile 100-106 geschlossen. Zum radindividuellen Drucklaufbau kann durch das Öffnen des jeweiligen Auslassventils 100-106 gezielt in einer Radbremse 60-66 Druck abgebaut werden. Die Ventile 194 im Zusatzmodul 74 sind geöffnet. Damit der Druckmittelfluss so stattfinden kann müssen die Ventile 120, 126 geschlossen und die Ventile 130, 136 offen sein, anders als in FIG. 2 dargestellt.

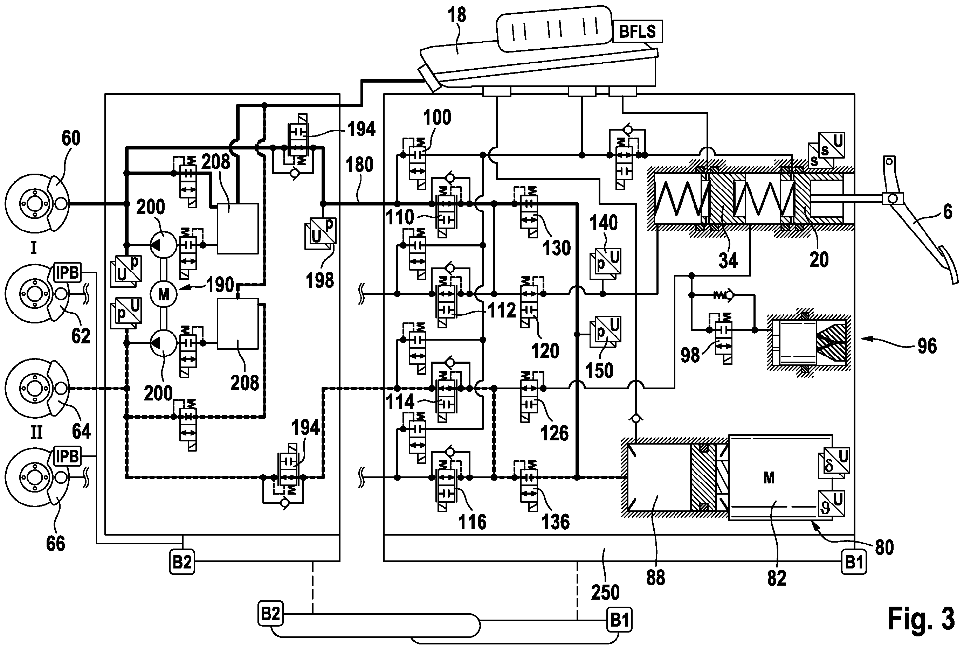

In der FIG. 3 ist das Bremssystem 2 dargestellt während eines zweiphasigen Spülzyklus bzw. Spülvorgangs, in dem überprüft wird, ob das Bremssystem 2 Druckmittel in den Druckmittelvorratsbehälter 18 ablassen kann. Dazu wird in einer ersten Phase geprüft, ob in dem Bremskreis I Druckmittel abgelassen werden kann. Dazu wird das Zuschaltventil 130 geöffnet, während Zuschaltventil 136 und Trennventile 120, 126 geschlossen werden. Nur das der Radbremse 60 zugeordnete Einlassventil 110 wird geöffnet, während Einlassventile 112, 114, 116 geschlossen sind. Das Auslassventil 100 wird geschlossen und das Ventil 194 wird geöffnet. Der Druckspeicher 208 wird hydraulisch mit der Radbremse 60 verbunden. Mit Hilfe des Linearaktuators bzw. der Druckbereitstellungseinrichtung 80 wird nun Bremsflüssigkeit in Bremskreis I verschoben, so dass aufgrund der Schaltung der Ventile Bremsflüssigkeit in den Druckmittelvorratsbehälter 18 verschoben wird.

Der Drucksensor 150 misst einen ersten Systemdruck $P_{sys,1}$, der im Wesentlichen dem im Druckraum 88 vorherrschenden Druck entspricht. Der Drucksensor 198 misst einen zweiten Systemdruck $P_{sys,2}$ in der Leitung 180 im Zusatzmodul 74. Bei dem durch den Linearaktuator vorgegebenen Volumenstrom werden sich nun insbesondere bei großer Viskosität der Bremsflüssigkeit Systemdrücke $P_{sys,1}$ und $P_{sys,2}$ einstellen. Ausgewertet werden bevorzugt die Mittelwerte der Systemdrücke $P_{sys,1}$ und $P_{sys,2}$ über den Zeitraum an dem der vorgegebene Volumenstrom gestellt wird.

Bei einer verstopften Leitung zwischen dem Zusatzmodul 74 und dem Druckmittelvorratsbehälter 18 bzw. Reservoir werden die beiden Drücke $P_{sys,1}$ und $P_{sys,2}$ nahezu den gleichen (relativ großen) Wert aufweisen. Ist dies nicht der Fall, d.h. ist die hydraulische Verbindung zum Reservoir durchlässig, stellt sich ein Druckgefälle von $P_{sys,1}$ zu $P_{sys,2}$ ein. Ein Akzeptanzkriterium wird daher bevorzugt formuliert

$$P_{sys,1} < (P_{akzept} = c + r * (P_{sys,1} - P_{sys,2})).$$

Dabei ist r eine zahlenmäßige Konstante aus dem Verhältnis der Leitungswiderstände. $R_1$ bestimmt durch die Leitung und den Ventilen auf dem Weg von $P_{sys,1}$ zu $P_{sys,2}$ und $R_2$ bestimmt durch die Leitung und dem Ventil auf dem Weg von $P_{sys,2}$ zum Vorratsbehälter 18. Es gilt $r = (R_1 + R_2)/R_2$ Es ist $r > 1$ und c ist eine Konstante mit der Einheit eines Druckes, wobei gilt $c > 0$.

Nach diesem Spülvorgang wird überprüft, ob auch im zweiten Bremskreis II Druckmittel in das Reservoir verschoben werden kann. Dazu wird das Zuschaltventil 136 geöffnet, während Zuschaltventil 130 und Trennventile 120, 126 geschlossen werden. Wie oben beschrieben wird im Zusatzmodul das Ventil 194 wird geöffnet. Der Druckspeicher 208 wird hydraulisch mit der Radbremse 64 verbunden. Da im Bremskreis II kein Drucksensor vorhanden ist, wird für die Anwendung des oben beschriebenen Akzeptanzkriteriums der dort gemessene Wert für den Spülvorgang im Bremskreis II verwendet.

## Patentansprüche

1. Verfahren zum Überprüfen der Funktionalität eines Bremssystems (2) für Kraftfahrzeuge, welches umfasst ein Hauptmodul (70), umfassend:

   • hydraulisch betätigbare Radbremsen (60, 62, 64, 66), wobei jeweils zwei Radbremsen (60, 62, 64, 66) einem Bremskreis (I, II) zugeordnet sind;

- zumindest ein elektrisch betätigbares Radventil (100-106; 110-116) je Radbremse (60, 62, 64, 66) zum Einstellen radindividueller Bremsdrücke;
- eine Druckbereitstellungseinrichtung (80) zum aktiven Druckaufbau in den Radbremsen (60, 62, 64, 66);
- einen unter Atmosphärendruck stehenden Druckmittelvorratsbehälter (18), und

weiterhin umfassend ein Zusatzmodul (74), welches für zwei Radbremsen (60, 64) jeweils umfasst:

- einen Drucksensor (184, 198) zur Messung des Druckes in einer zur Radbremse (60, 64) führenden Radbremsleitung (180);
- ein in der Radbremsleitung (180) angeordnetes stromlos offenes Trennventil (194);
- eine Pumpe (200),

wobei zur Beurteilung der Funktionalität des Bremssystems (2) wenigstens eine Größe ($P_{sys,1}$, $P_{sys,2}$) gemessen wird, und wobei wenigstens ein Akzeptanzkriterium verwendet wird, und wobei überprüft wird, ob die Größe ($P_{sys,1}$, $P_{sys,2}$) diesem Akzeptanzkriterium genügt, und wobei wenigstens eine die Viskosität der Bremsflüssigkeit repräsentierende Größe bestimmt wird, und wobei das wenigstens eine Akzeptanzkriterium von einer die Viskosität repräsentierenden Größe abhängt.

2. Verfahren nach Anspruch 1, wobei ein Spülvorgang durchgeführt wird, bei dem durch die Druckbereitstellungsvorrichtung (80) Bremsflüssigkeit in den Druckmittelvorratsbehälter (18) verschoben wird, wobei ein erster Systemdruck ($P_{sys,1}$) gemessen wird, und wobei ein zweiter Systemdruck ($P_{sys,2}$) gemessen wird, und das Akzeptanzkriterium als erfüllt gilt, wenn der erste Systemdruck ($P_{sys,1}$) kleiner ist als ein Akzeptanzdruck, der von der Druckdifferenz aus erstem und zweitem Systemdruck ($P_{sys,2}$) abhängt.

3. Verfahren nach Anspruch 2, wobei der Akzeptanzdruck gebildet wird aus der Summe einer ersten Konstanten (c) und einem Produkt aus der Druckdifferenz aus erstem ($P_{sys,1}$) und zweitem Systemdruck ($P_{sys,2}$) und einer zweiten Konstanten (r).

4. Verfahren nach Anspruch 2 oder 3, wobei der erste Systemdruck ($P_{sys,1}$) in einer hydraulischen Leitung im Hauptmodul (70) gemessen wird und wobei der zweite Systemdruck ($P_{sys,2}$) in einer hydraulischen Leitung (180) im Zusatzmodul (74) gemessen wird.

5. Verfahren nach Anspruch 4, wobei in einem ersten Bremskreis (I) im Zusatzmodul ein Drucksensor angeordnet ist, mit dem der zweite Systemdruck ($P_{sys,2}$) gemessen wird, und wobei der im ersten Bremskreis (I) gemessene Wert des Systemdrucks auch bei dem Spülvorgang des zweiten Bremskreises (II) verwendet wird.

6. Verfahren nach einem der Ansprüche 1 bis 5, wobei ein Druckaufbauvorgang mit Hilfe der Druckbereitstellungseinrichtung (80) durchgeführt wird, wobei für eine vorgegebene Zeitspanne (t) Bremsflüssigkeit von der Druckbereitstellungseinrichtung (80) in wenigstens eine Radbremse (60, 64) gefördert wird, und wobei ein Systemdruck ($P_{sys,1}$) gemessen wird, der nach der vorgegebenen Zeitspanne (t) vorliegt, und wobei ein Akzeptanzkriterium als erfüllt gilt, wenn der gemessene Druck größer ist als ein erwarteter Druck, der Zeitspanne und einer erwarteten Förderleistung der Druckbereitstellungseinrichtung (80) abhängt.

7. Verfahren nach Anspruch 6, wobei ein erwartetes Fördervolumen ($V_e$) berechnet wird aus dem Produkt einer von der Viskosität und/oder Temperatur abhängigen Förderleistung (Q) und der vorgegebenen Zeitspanne (t), und wobei der erwartete Druck aus dem erwarteten Fördervolumen mit Hilfe einer vorgegebenen Druck-Volumen-Kennlinie (pV) berechnet wird.

8. Verfahren nach Anspruch 7, wobei das erwartete Fördervolumen um ein Lüftspielvolumen ($V_L$) korrigiert wird.

9. Verfahren nach einem der Ansprüche 1 bis 8, wobei die Temperatur (T) der Bremsflüssigkeit mittels wenigstens eines Temperatursensors gemessen wird.

10. Verfahren nach Anspruch 9, wobei die Temperatur (T) mit Hilfe einer Vielzahl von Temperatursensoren gemessen wird, aus deren Messwerten dann ein Mittelwert gebildet wird.

11. Verfahren nach einem der vorherigen Ansprüche, wobei mittels einer Kennlinie aus der Temperatur die Viskosität der Bremsflüssigkeit bestimmt wird.

**12.** Verfahren nach einem der Ansprüche 9 bis 11, wobei wenigstens ein Drucksensor im Hauptmodul (70) und wenigstens ein Drucksensor im Zusatzmodul (71) angeordnet sind.

**13.** Verfahren nach Anspruch 12, wobei der jeweilige Temperatursensor mit jeweils einem Drucksensor in integrierter Bauweise gebildet ist.

**14.** Bremssystem (2) für Kraftfahrzeuge, umfassend ein Hauptmodul (70), umfassend:

• hydraulisch betätigbare Radbremsen (60, 62, 64, 66), wobei jeweils zwei Radbremsen (60, 62, 64, 66) einem Bremskreis (I, II) zugeordnet sind;
• zumindest ein elektrisch betätigbares Radventil (100-106; 110-116) je Radbremse (60, 62, 64, 66) zum Einstellen radindividueller Bremsdrücke;
• eine Druckbereitstellungseinrichtung (80) zum aktiven Druckaufbau in den Radbremsen (60, 62, 64, 66);
• einen unter Atmosphärendruck stehenden Druckmittelvorratsbehälter (18), und

weiterhin umfassend ein Zusatzmodul (74), welches für zwei Radbremsen (60, 64) jeweils umfasst:

• einen Drucksensor (184, 198) zur Messung des Druckes in einer zur Radbremse (60, 64) führenden Radbremsleitung (180);
• ein in der Radbremsleitung (180) angeordnetes stromlos offenes Trennventil (194);
• eine Pumpe (200),

**gekennzeichnet durch** eine Steuer- und Regeleinheit, in der ein Verfahren nach einem der vorherigen Ansprüche hardware- und/oder softwaremäßig implementiert ist.

**15.** Bremssystem (2) nach Anspruch 14, wobei die Druckbereitstellungseinrichtung (80) als Linearaktuator ausgebildet ist.

## Claims

**1.** Method for checking the functionality of a braking system (2) for motor vehicles, which braking system comprises a main module (70), comprising:

• hydraulically actuatable wheel brakes (60, 62, 64, 66), wherein pairs of said wheel brakes (60, 62, 64, 66) are assigned to respective brake circuits (I, II);
• at least one electrically actuatable wheel valve (100-106; 110-116) per wheel brake (60, 62, 64, 66) for setting wheel-specific brake pressures;
• a pressure provision device (80) for actively building up pressure in the wheel brakes (60, 62, 64, 66);
• a pressure-medium reservoir (18) at atmospheric pressure, and
furthermore comprising an auxiliary module (74), which comprises for each of two wheel brakes (60, 64):

• a pressure sensor (184, 198) for measuring the pressure in a wheel brake line (180) leading to the wheel brake (60, 64);
• an isolating valve (194), which is arranged in the wheel brake line (180) and which is open when deenergized;
• a pump (200),

wherein at least one variable ($P_{sys,1}$, $P_{sys,2}$) is measured in order to assess the functionality of the braking system (2), and wherein at least one acceptance criterion is used, and wherein it is checked whether the variable ($P_{sys,1}$, $P_{sys,2}$) satisfies said acceptance criterion, and wherein at least one variable representing the viscosity of the brake fluid is determined, and wherein the at least one acceptance criterion depends on a variable representing the viscosity.

**2.** Method according to Claim 1, wherein a purging process is carried out, in which brake fluid is displaced into the pressure-medium reservoir (18) by the pressure provision device (80), wherein a first system pressure ($P_{sys,1}$) is measured, and wherein a second system pressure ($P_{sys,2}$) is measured, and the acceptance criterion counts as satisfied if the first system pressure ($P_{sys,1}$) is lower than an acceptance pressure, which depends on the pressure difference between the first and second system pressures ($P_{sys,2}$).

3. Method according to Claim 2, wherein the acceptance pressure is formed from the sum of a first constant (c) and a product of the pressure difference between the first ($P_{sys,1}$) and the second system pressure ($P_{sys,2}$) and a second constant (r).

4. Method according to Claim 2 or 3, wherein the first system pressure ($P_{sys,1}$) is measured in a hydraulic line in the main module (70), and wherein the second system pressure ($P_{sys,2}$) is measured in a hydraulic line (180) in the auxiliary module (74).

5. Method according to Claim 4, wherein a pressure sensor, by means of which the second system pressure ($P_{sys,2}$) is measured, is arranged in a first brake circuit (I) in the auxiliary module, and wherein the value of the system pressure measured in the first brake circuit (I) is also used in the purging process for the second brake circuit (II).

6. Method according to any of Claims 1 to 5, wherein a pressure build-up process is carried out with the aid of the pressure provision device (80), wherein brake fluid is delivered into at least one wheel brake (60, 64) by the pressure provision device (80) for a predetermined time period (t), and wherein a system pressure ($P_{sys,1}$) that is present after the predetermined time period (t) is measured, and wherein an acceptance criterion counts as satisfied if the measured pressure is greater than an expected pressure, which depends on the time period and an expected delivery rate of the pressure provision device (80).

7. Method according to Claim 6, wherein an expected delivery volume ($V_e$) is calculated from the product of a delivery rate (Q), which is dependent on the viscosity and/or temperature, and the predetermined time period (t), and wherein the expected pressure is calculated from the expected delivery volume with the aid of a predetermined pressure-volume characteristic (pV).

8. Method according to Claim 7, wherein the expected delivery volume is corrected by a release clearance volume ($V_L$).

9. Method according to any of Claims 1 to 8, wherein the temperature (T) of the brake fluid is measured by means of at least one temperature sensor.

10. Method according to Claim 9, wherein the temperature (T) is measured with the aid of a multiplicity of temperature sensors, from the measured values of which a mean value is then formed.

11. Method according to any of the preceding claims, wherein the viscosity of the brake fluid is determined from the temperature by means of a characteristic.

12. Method according to any of Claims 9 to 11, wherein at least one pressure sensor is arranged in the main module (70) and at least one pressure sensor is arranged in the auxiliary module (71).

13. Method according to Claim 12, wherein the respective temperature sensor is formed by means of a respective pressure sensor of integrated design.

14. Braking system (2) for motor vehicles, comprising a main module (70), comprising:

   • hydraulically actuatable wheel brakes (60, 62, 64, 66), wherein pairs of said wheel brakes (60, 62, 64, 66) are assigned to respective brake circuits (I, II);
   • at least one electrically actuatable wheel valve (100-106; 110-116) per wheel brake (60, 62, 64, 66) for setting wheel-specific brake pressures;
   • a pressure provision device (80) for actively building up pressure in the wheel brakes (60, 62, 64, 66);
   • a pressure-medium reservoir (18) at atmospheric pressure, and
   furthermore comprising an auxiliary module (74), which comprises for each of two wheel brakes (60, 64):

      • a pressure sensor (184, 198) for measuring the pressure in a wheel brake line (180) leading to the wheel brake (60, 64);
      • an isolating valve (194), which is arranged in the wheel brake line (180) and which is open when deenergized;
      • a pump (200),

characterized by an open-loop and closed-loop control unit, in which a method according to any of the preceding claims is implemented in hardware and/or software.

15. Braking system (2) according to Claim 14, wherein the pressure provision device (80) is designed as a linear actuator.

**Revendications**

1. Procédé permettant de contrôler la fonctionnalité d'un système de freinage (2) pour véhicules automobiles qui comprend un module principal (70), comprenant :

    • des freins de roue à commande hydraulique (60, 62, 64, 66), respectivement deux freins de roue (60, 62, 64, 66) étant associés à un circuit de freinage (I, II) ;
    • au moins une soupape de roue à commande électrique (100-106 ; 110-116) par frein de roue (60, 62, 64, 66) pour régler des pressions de freinage spécifiques à chaque roue ;
    • un dispositif générateur de pression (80) pour la mise sous pression active dans les freins de roue (60, 62, 64, 66) ;
    • un réservoir de fluide sous pression (18) à la pression atmosphérique, et
    comprenant en outre un module supplémentaire (74) qui comprend pour deux freins de roue (60, 64) respectivement :

        • un capteur de pression (184, 198) pour mesurer la pression dans une conduite de frein de roue (180) menant au frein de roue (60, 64);
        • une soupape de séparation (194) ouverte sans courant et disposée dans la conduite de frein de roue (180) ;
        • une pompe (200),

    dans lequel, pour évaluer la fonctionnalité du système de freinage (2) au moins une grandeur ($P_{sys,1}$, $P_{sys,2}$) est mesurée,
    et dans lequel au moins un critère d'acceptation est utilisé, et on contrôle si la grandeur ($P_{sys,1}$, $P_{sys,2}$) satisfait ce critère d'acceptation, et dans lequel au moins une grandeur représentant la viscosité du liquide de freinage est déterminée, et dans lequel ledit au moins un critère d'acceptation dépend d'une grandeur représentant la viscosité.

2. Procédé selon la revendication 1, dans lequel un processus de rinçage est effectué lors duquel le dispositif générateur de pression (80) déplace le liquide de freinage dans le réservoir de fluide sous pression (18), dans lequel une première pression du système ($P_{sys,1}$) est mesurée, et dans lequel une deuxième pression du système ($P_{sys,2}$) est mesurée, et le critère d'acceptation est considéré comme satisfait si la première pression du système ($P_{sys,1}$) est inférieure à une pression d'acceptation qui dépend de la différence de pression entre la première et la deuxième pression du système ($P_{sys,2}$).

3. Procédé selon la revendication 2, dans lequel la pression d'acceptation est formée à partir de la somme d'une première constante (c) et d'un produit de la différence de pression entre la première ($P_{sys,1}$) et la deuxième pression du système ($P_{sys,2}$) et d'une deuxième constante (r).

4. Procédé selon la revendication 2 ou 3, dans lequel la première pression du système ($P_{sys,1}$) est mesurée dans une conduite hydraulique dans le module principal (70), et dans lequel la deuxième pression du système ($P_{sys,2}$) est mesurée dans une conduite hydraulique (180) dans le module supplémentaire (74).

5. Procédé selon la revendication 4, dans lequel, dans un premier circuit de freinage (I), dans le module supplémentaire est disposé un capteur de pression qui permet de mesurer la deuxième pression du système ($P_{sys,2}$), et dans lequel la valeur de la pression du système, mesurée dans le premier circuit de freinage (I), est également utilisée lors du processus de rinçage du deuxième circuit de freinage (II).

6. Procédé selon l'une quelconque des revendications 1 à 5, dans lequel un processus de mise sous pression est effectué à l'aide du dispositif générateur de pression (80),

    dans lequel, pendant une période de temps prédéfinie (t), du liquide de frein est débité par le dispositif générateur de pression (80) dans au moins un frein de roue (60, 64), et dans lequel une pression du système ($P_{sys,1}$) est mesurée qui est présente après la période de temps prédéfinie (t), et

dans lequel un critère d'acceptation est considéré comme satisfait si la pression mesurée est supérieure à une pression attendue qui dépend de la période de temps et d'une puissance de débit attendue du dispositif générateur de pression (80).

**7.** Procédé selon la revendication 6, dans lequel un volume débité ($V_e$) attendu est calculé à partir du produit d'une puissance de débit (Q) dépendant de la viscosité et/ou de la température et de la période de temps prédéfinie (t), et dans lequel la pression attendue est calculée à partir du volume débité attendu à l'aide d'une courbe caractéristique pression/volume prédéfinie (pV).

**8.** Procédé selon la revendication 7, dans lequel le volume débité est corrigé d'un volume de jeu d'aération ($V_L$).

**9.** Procédé selon l'une quelconque des revendications 1 à 8, dans lequel la température (T) du liquide de frein est mesurée au moyen d'au moins un capteur de température.

**10.** Procédé selon la revendication 9, dans lequel la température (T) est mesurée à l'aide d'une pluralité de capteurs de température à partir des valeurs de mesure desquels une moyenne est ensuite établie.

**11.** Procédé selon l'une quelconque des revendications précédentes, dans lequel la viscosité du liquide de frein est déterminée à partir de la température au moyen d'une courbe caractéristique.

**12.** Procédé selon l'une quelconque des revendications 9 à 11, dans lequel au moins un capteur de pression est disposé dans le module principal (70) et au moins un capteur de pression est disposé dans le module supplémentaire (71).

**13.** Procédé selon la revendication 12, dans lequel le capteur de température respectif est formé avec respectivement un capteur de pression selon une conception intégrée.

**14.** Système de freinage (2) pour véhicules automobiles, comprenant un module principal (70), comprenant :

 • des freins de roue à commande hydraulique (60, 62, 64, 66), dans lequel respectivement deux freins de roue (60, 62, 64, 66) sont associés à un circuit de freinage (I, II) ;
 • au moins une soupape de roue à commande électrique (100-106 ; 110-116) par frein de roue (60, 62, 64, 66) pour régler des pressions de frein spécifiques à chaque roue ;
 • un dispositif générateur de pression (80) pour la mise sous pression active dans les freins de roue (60, 62, 64, 66) ;
 • un réservoir de fluide sous pression (18) à la pression atmosphérique, et
 comprenant en outre un module supplémentaire (74) qui comprend pour deux freins de roue (60, 64) respectivement :

  • un capteur de pression (184, 198) pour mesurer la pression dans une conduite de frein de roue (180) menant au frein de roue (60, 64) ;
  • une soupape de séparation (194) ouverte sans courant et disposée dans la conduite de frein de roue (180) ;
  • une pompe (200),

 **caractérisé par** une unité de commande et de régulation dans laquelle est mis en œuvre de manière matérielle et/ou logicielle un procédé selon l'une quelconque des revendications précédentes.

**15.** Système de freinage (2) selon la revendication 14, dans lequel le dispositif générateur de pression (80) est réalisé sous forme d'actionneur linéaire.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013204778 A1
- WO 2017144201 A1
- DE 102014216843 A1
- US 2016052501 A1
- US 6901789 B1